# EUROPEAN PATENT APPLICATION

(11) **EP 2 910 480 A1**
(43) Date of publication of application: **26.08.2015**
(21) Application number: 13844134.0
(22) Date of filing: 04.10.2013
(51) Int. Cl.: B65B 57/00, B65D 25/20, B65D 25/34, G09F 3/04

(54) **CONTAINER WITH SHRINK-FIT LABEL, SHRINK-FIT LABEL, AND MANUFACTURING METHOD FOR CONTAINER WITH SHRINK-FIT LABEL**

(30) Priority: 04.10.2012 JP 2012222359
(71) Applicant: Fuji Seal International, Inc., Osaka 532-0003 (JP)
(72) Inventor: OHOKA, Masahiko, Osaka-shi Osaka 532-0003 (JP); HINO, Akihiko, Osaka-shi Osaka 532-0003 (JP); TAKAMURA, Masaharu, Osaka-shi Osaka 532-0003 (JP)
(74) Representative: Hylarides, Paul Jacques
(86) International application number: PCT/JP2013/077080
(87) International publication number: WO 2014/054780

(57) **Abstract**

The purpose of the present invention is to provide a container having a shrink-fit label applied to not only the side surface but also the bottom surface thereof, wherein it is possible to detect the offset of the shrink-fit label in the lateral direction. A container with a shrink-fit label is obtained by attaching a shrink-fit label (2) along the side surface (11) and the bottom surface (10) of a container (1). A lateral-detection mark (51) for detecting the offset of the shrink-fit label (2) in the lateral direction relative to the container (1) is provided to the bottom-surface covering portion (40) of the shrink-wrap label (2), which is the portion of the shrink-wrap label (2) that covers the bottom surface (10) of the container (1). A longitudinal-detection mark (50) for detecting the offset of the shrink-wrap label (2) in the longitudinal direction relative to the container (1) is also provided.

## Description

### TECHNICAL FIELD

The present invention relates to a container that has been fitted with a shrink-fit label, a shrink-fit label that is used in this container with a shrink-fit label, and a manufacturing method for the container with a shrink-fit label.

### BACKGROUND ART

When a shrink-fit label is fitted to any of a variety of containers, the shrink-fit label must be fitted precisely to the container in a prescribed position. Various techniques have been proposed for detecting whether or not the shrink-fit label has been fitted in the prescribed position, including the techniques proposed in Patent Documents 1 and 2 mentioned below. However, because these techniques inspect the state of the shrink-fit label from a side surface portion of the container, in those cases where the shrink-fit label is fitted not only to the side surface of the container but also to the bottom surface, positional displacement of the shrink-fit label in the axial direction, namely the longitudinal direction, is difficult to detect precisely.

Accordingly, the inventors of the present invention developed an inspection method in which containers having a shrink-fit label that is fitted not only to the side surface of the container but also to the bottom surface could be inspected from the bottom surface of the container to detect positional displacement of the shrink-fit label in the longitudinal direction relative to the container (see Patent Document 3 mentioned below). However, although this inspection method is ideal for detecting positional displacement of the shrink-fit label in the longitudinal direction, it is unsuitable for detecting positional displacement of the shrink-fit label in the lateral direction, namely the circumferential direction.

This type of positional displacement of the shrink-fit label in the lateral direction relative to the container occurs, for example, when the shrink-fit label undergoes a positional displacement in the lateral direction relative to the container during the fitting of the shrink-fit label to the container. In such cases, a state is obtained in which the shrink-fit label exhibits a substantially uniform positional displacement in the lateral direction around the entire perimeter of the container.

Further, positional displacement of the shrink-fit label in the lateral direction relative to the container can also occur when uniform heat shrinkage does not occur around the entire perimeter of the shrink-fit label during heat shrinkage of the shrink-fit label. For example, if the degree of heat shrinkage around the perimeter of the shrink-fit label is larger at the front surface of the label and smaller at the rear surface of the label, then the design of the shrink-fit label will be pulled unevenly toward the front surface. Similarly, if the degree of heat shrinkage around the perimeter of the shrink-fit label is larger on the right-side of the label and smaller on the left-side of the label, then the design of the shrink-fit label is pulled unevenly toward the right side.

This type of positional displacement of the shrink-fit label in the lateral direction is often not a problem in containers having a circular shape when viewed in a lateral cross-section, but in the case of containers having, for example, a polygonal shape when viewed in a lateral cross-section, the position in the lateral direction of the shrink-fit label relative to the container is important, and preventing any positional displacement is necessary. For example, when it is desirable that the main design or a logo mark or the like of the shrink-fit label is positioned precisely in a prescribed position on the front surface among the side surface portions of the container, the position in the lateral direction of the shrink-fit label relative to the container is very important. This issue is not limited only to polygonal containers, but applies to all containers in which positional displacement of the shrink-fit label in the lateral direction can be problematic, and a novel detection method that can deal with this problem has been needed.

### PRIOR ART DOCUMENTS

### PATENT DOCUMENTS

Patent Document 1: JP 2005-119706 A
Patent Document 2: JP 2005-77583 A
Patent Document 3: JP 4,627,257 B

### SUMMARY OF THE INVENTION

### PROBLEMS TO BE SOLVED BY THE INVENTION

The present invention has been developed in light of the conventional issues described above, and has an object of providing a container having a shrink-fit label fitted to not only the side surface but also down to the bottom surface thereof, wherein positional displacement of the shrink-fit label in the lateral direction can be detected.

### MEANS FOR SOLVING THE PROBLEMS

In order to achieve the object described above, a container with a shrink-fit label according to the present invention is a container fitted with a shrink-fit label that extends from the side surface onto the bottom surface of the container, wherein a lateral direction detection mark for detecting positional displacement of the shrink-fit label in the lateral direction relative to the container is provided on the bottom surface-covering portion of the shrink-fit label that covers the bottom surface of the container.

In the container with a shrink-fit label of this configuration, the lateral direction detection mark is provided on the bottom surface-covering portion of the shrink-fit label, which is the portion that covers the bottom surface of the container. Accordingly, by using this lateral direction detection mark, the existence or absence of positional displacement of the shrink-fit label in the lateral direction relative to the container can be detected easily. Specifically, by acquiring an image of this lateral direction detection mark with an imaging device, and then performing image processing of the acquired image data using an image processing device, the position of the lateral direction detection mark can be identified, and a judgment can be made by a judgment device as to whether or not the position of the lateral direction detection mark is within a predetermined permissible range. In other words, when the lateral direction detection mark is positioned within a prescribed range relative to a reference position, the positional displacement of the shrink-fit label in the lateral direction relative to the container falls within a permissible range, and therefore the container with the shrink-fit label is adjudged an OK item (conforming item), whereas when the lateral direction detection mark is positioned outside the prescribed range relative to the reference position, the positional displacement of the shrink-fit label in the lateral direction relative to the container exceeds the permissible range, and therefore the container with the shrink-fit label can be adjudged an NG item (defective item).

It is particularly preferable that the lateral direction detection mark has a side edge that extends in a direction substantially orthogonal to the bottom edge of the shrink-fit label. In such a configuration, the lateral direction position can be determined precisely by image recognition of the side edge.

Moreover, the lateral direction detection mark is preferably a linear mark that extends in a direction substantially orthogonal to the bottom edge of the shrink-fit label. In such a configuration, either one or both of the two side edges of the lateral direction detection mark can be used, and because the lateral direction detection mark is linear, a center position between the two side edges can also be used as the position of the lateral direction detection mark.

Further, it is preferable that the side surface of the container forms a rectangular shape when viewed in a lateral cross-section, the bottom surface-covering portion comprises four side portions corresponding with the four walls of the side surface, and the lateral direction detection mark is provided in the central region in the lateral direction on at least one side portion among the four side portions. In the bottom surface-covering portion, the orientation of the corner portions between adjacent side portions is greatly affected by the bottom edge of the shrink-fit label, and therefore if the lateral direction detection mark is provided in the vicinity of these corner portions, there is an increased likelihood of considerable variation in the measurements. Accordingly, it is preferable that the lateral direction detection mark is provided in the central region in the lateral direction, distant from the corner portions, as this enables measurement variations to be suppressed.

Moreover, it is preferable that lateral direction detection marks are formed on a pair of opposing side portions among the four side portions. For example, when the bottom surface of the container is viewed in front view, if the direction across which a pair of opposing wall surfaces among the four wall surfaces of the container face each other is deemed the X-axis, and the direction across which the remaining pair of wall surfaces face each other is deemed the Y-axis, then when a lateral direction detection mark exists on one of the pair of side portions that face each other across the Y-axis direction, the distance in the X-axis direction may be measured from one of the pair of wall surfaces that face each other across the X-axis direction to the lateral direction detection mark, and an OK/NG judgment can then be made on the basis of whether this distance falls within a prescribed range. However, when the bottom surface of the container is viewed in front view, it is difficult to focus the image on the contours of the wall surfaces of the container with a high degree of precision, meaning there is a limit to the degree of precision with which the measurement can be performed. In contrast, if a lateral direction detection mark is provided on each of a pair of opposing side portions, then for example in the case where the two lateral direction detection marks face each other across the Y-axis direction, the separation distance in the X-axis direction between the two lateral direction detection marks can be measured, and an OK/NG judgment can then made on the basis of whether this separation distance falls within a prescribed range. Because these two lateral direction detection marks are both positioned on the bottom surface-covering portion, the image can be readily focused, meaning the measurement can be performed with higher precision than the case where a distance is measured from a wall surface of the container. In addition, because the separation distance is measured in the distance orthogonal to the direction across which the two lateral direction detection marks face each other on opposing side portions, any positional displacement of the shrink-fit label in the lateral direction relative to the container appears magnified, enabling measurement to be performed with even greater precision. Moreover, because the direction in which one lateral direction detection mark has been positionally displaced relative to the other lateral direction detection mark can also be detected, the directionality of the positional displacement of the shrink-fit label can be determined.

Further, when the side surface of the container forms an elliptical shape when viewed in a lateral cross-section, it is preferable that a lateral direction detection mark is provided in at least one location among a total of four locations composed of two locations positioned on the major axis and two locations positioned on the minor axis of the bottom surface-covering portion. In this case, when the bottom surface of the container is viewed in front view, the bottom surface of the container is elliptical, and for example by orienting the major axis of the elliptical shape parallel to the X-axis and the minor axis parallel to the Y-axis, positional displacement of the lateral direction detection mark can be easily measured.

Furthermore, it is preferable that a longitudinal direction detection mark for detecting positional displacement of the shrink-fit label in the longitudinal direction relative to the container is formed on the bottom surface-covering portion as a line that extends around the bottom edge of the shrink-fit label, and at least a portion of the lateral direction detection mark is positioned inside the longitudinal direction detection mark. Here, the expression "inside the longitudinal direction detection mark" means the side closer to the bottom edge of the shrink-fit label. By providing the longitudinal direction detection mark on the bottom surface-covering portion, positional displacement in the longitudinal direction can be detected together with any positional displacement in the lateral direction. By forming the longitudinal direction detection mark as a line that extends around the bottom edge of the shrink-fit label, a plurality of locations can be inspected around the bottom edge of the shrink-fit label. Accordingly, not only can those cases where the entire shrink-fit label has been displaced in the longitudinal direction be detected, but cases in which the bottom surface-covering portion of the shrink-fit label has undergone localized distortion can also be detected. When the longitudinal direction detection mark is formed as a line that extends around the bottom edge of the shrink-fit label in the manner described above, it is preferable that at least a portion of the lateral direction detection mark is positioned inside the longitudinal direction detection mark, as this enables positional displacement to be detected with even greater precision.

Furthermore, a shrink-fit label according to the present invention is a shrink-fit label that is fitted so as to extend from the side surface onto the bottom surface of a container, wherein a lateral direction detection mark for detecting positional displacement of the shrink-fit label in the lateral direction relative to the container is provided on a portion of the shrink-fit label that covers the bottom surface of the container.

It is particularly preferable that lateral direction detection marks are provided in two positions which bisect the perimeter of the shrink-fit label. In other words, by providing at least two lateral direction detection marks, detection can be performed with greater precision than the case where only one lateral direction detection mark is provided. Further, by providing the lateral direction detection marks in positions which bisect the perimeter of the shrink-fit label, detection of greater precision can be achieved by measuring the separation distance between the two lateral direction detection marks. For example, if the bottom surface of the container to which the shrink-fit label has been fitted is viewed in front view, and two mutually orthogonal directions are deemed the X-axis direction and the Y-axis direction, then by measuring the separation distance between the two lateral direction detection marks in either the X-axis direction or the Y-axis direction, any positional displacement of the shrink-fit label in the lateral direction relative to the container can be detected with a high degree of precision.

Moreover, a manufacturing method for a container with a shrink-fit label according to the present invention includes a step of fitting a shrink-fit label provided with a lateral direction detection mark to the side surface of a container, a step of heat-shrinking and fitting the shrink-fit label to the container so that the lateral direction detection mark is positioned on the portion of the shrink-fit label that covers the bottom surface of the container, and a step of detecting any positional displacement of the shrink-fit label in the lateral direction relative to the container by measuring the position of the lateral direction detection mark on the shrink-fit label fitted to the container.

### ADVANTAGES OF THE INVENTION

As described above, the container with a shrink-fit label according to the present invention is provided with a lateral direction detection mark on the bottom surface-covering portion of the shrink-fit label, which is the portion that covers the bottom surface of the container, and therefore positional displacement in the lateral direction of the shrink-fit label can be detected even for containers such as polygonal containers in which the shrink-fit label is fitted down onto the bottom surface.

Further, the shrink-fit label according to the present invention is provided with a lateral direction detection mark on the portion of the shrink-fit label that covers the bottom surface of the container, and therefore positional displacement in the lateral direction can be detected even when the label is fitted to containers such as polygonal containers.

Furthermore, the manufacturing method for a container with a shrink-fit label according to the present invention includes a step of detecting positional displacement of the shrink-fit label in the lateral direction relative to the container by measuring the position of a lateral direction detection mark on the shrink-fit label fitted to the container, and therefore positional displacement of the shrink-fit label in the lateral direction can be detected even for containers such as polygonal containers in which the shrink-fit label is fitted down onto the bottom surface.

### BRIEF DESCRIPTION OF THE DRAWINGS

FIG. 1 is a perspective view illustrating a container with a shrink-fit label according to an embodiment of the present invention.
FIG. 2 is a front view of the container used in the same container with a shrink-fit label.
FIG. 3 is a bottom view illustrating the same container with a shrink-fit label, illustrating the case where the shrink-fit label has been fitted in the normal position.
FIG. 4 is a bottom view illustrating the same container with a shrink-fit label, illustrating a case where the shrink-fit label has been fitted with a prescribed amount of positional displacement in the lateral direction.
FIG. 5 is a front view illustrating the shrink-fit label used in the same container with a shrink-fit label.
FIG. 6 is a bottom view illustrating a method for detecting positional displacement of the shrink-fit label in the longitudinal direction in the same container with a shrink-fit label.
FIG. 7 is an enlarged view of the essential section of FIG. 6.
FIG. 8 is a bottom view illustrating a method for detecting positional displacement of the shrink-fit label in the lateral direction in the same container with a shrink-fit label.
FIG. 9 is a bottom view illustrating a method for detecting positional displacement of a shrink-fit label in the lateral direction in a container with a shrink-fit label according to another embodiment of the present invention.
FIG. 10 is a bottom view illustrating a method for detecting positional displacement of the shrink-fit label in the lateral direction in the same container with a shrink-fit label.
FIG. 11 is a bottom view illustrating a method for detecting positional displacement of a shrink-fit label in the lateral direction in a container with a shrink-fit label according to yet another embodiment of the present invention.
FIG. 12 is a bottom view illustrating a state, in the container with a shrink-fit label illustrated in FIG. 4, in which the shrink-fit label has been fitted with a prescribed amount of positional displacement in the lateral direction.
FIG. 13 is a bottom view illustrating a method for detecting positional displacement of the shrink-fit label in the lateral direction in the same container with a shrink-fit label.
FIG. 14 is a front view illustrating a shrink-fit label in yet another embodiment of the present invention.
FIG. 15(a) is a cross-sectional view illustrating a long label body prior to a folding treatment, and FIG. 15(b) is a cross-sectional view illustrating the long label body following the folding treatment.
FIG. 16 is a cross-sectional view illustrating a state in which the shrink-fit label has been fitted to the side surface of the container, prior to heat shrinking of the shrink-fit label.
FIG. 17 is a cross-sectional view illustrating a container used in a container with a shrink-fit label according to yet another embodiment of the present invention.
FIG. 18 is a bottom view illustrating a container with a shrink-fit label according to yet another embodiment of the present invention, illustrating the case where the shrink-fit label has been fitted in the normal position.

### EMBODIMENTS FOR CARRYING OUT THE INVENTION

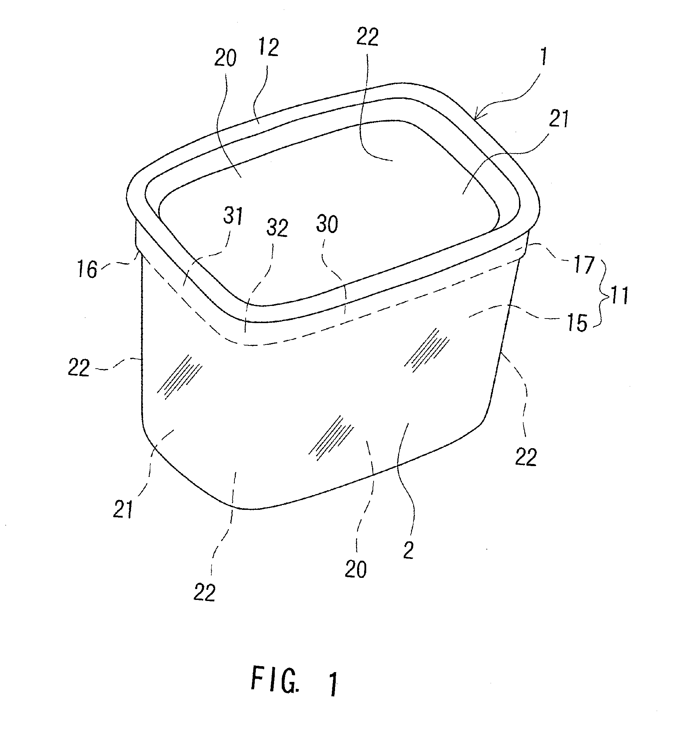

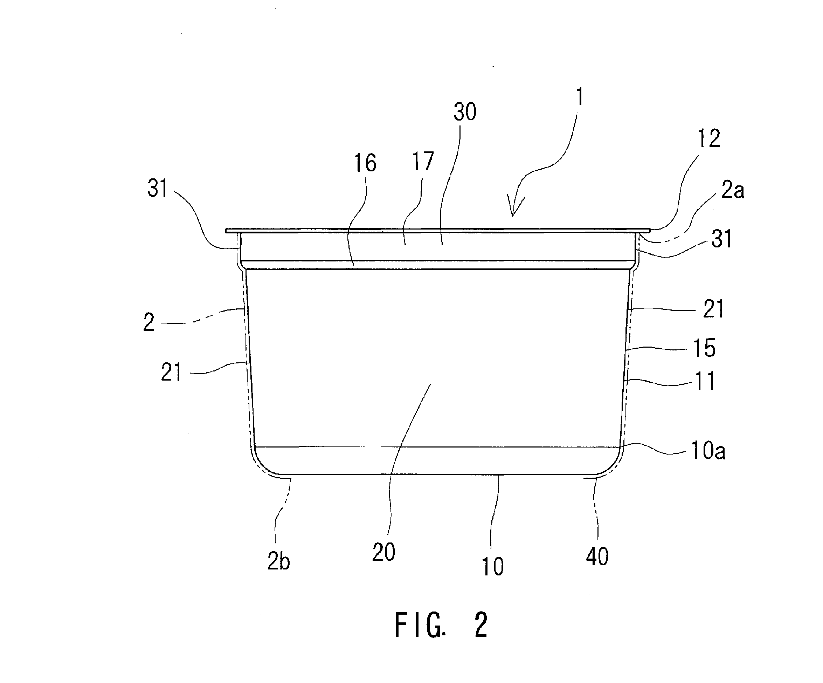

A container with a shrink-fit label according to an embodiment of the present invention and a method for detecting positional displacement of the shrink-fit label on the container are described below with reference to FIG. 1 to FIG. 8. The container with a shrink-fit label illustrated in FIG. 1 is a polygonal container with a shrink-fit label in which a shrink-fit label 2 is fitted to a polygonal container 1 having a side surface 11 that appears as a rectangle when viewed in a lateral cross-section. In FIG. 2, the shrink-fit label 2 is indicated by a two-dot chain line.

The container 1 is formed by injection molding from any of various synthetic resins, and may be formed by blow molding or sheet molding or the like. The container 1 is a closed-bottom rectangular cylindrical shape which is open at the top surface, and includes a bottom surface 10, a side surface 11 which has a rectangular shape when viewed in a lateral cross-section and extends upward from the peripheral edge of the bottom surface 10, and a flange 12 that protrudes outward at the top edge of the side surface 11. The bottom surface 10 is a rectangular shape that matches the rectangular cross-sectional shape of the side surface 11.

The side surface 11 is formed so as to extend upward from the peripheral edge of the bottom surface 10, and can be broadly divided into upper and lower regions. In other words, the side surface 11 is composed of a main side wall portion 15, which represents the lower region of the side surface that extends upward from the bottom surface 10, and a side wall upper portion 17, which represents the upper region of the side surface and extends from the top of the main side wall portion 15 via a stepped portion 16 that extends outward from the main side wall portion 15.

The main side wall portion 15 accounts for the majority of the area of the side surface 11, and is formed with a tapered shape that gradually widens as it extends upward from the bottom surface 10. However, the slope gradient of the main side wall portion 15 is only about several degrees. The main side wall portion 15 has four main wall surfaces 20 and 21. In other words, the main side wall portion 15 has a pair of main wall surfaces 20 on the long sides, and a pair of main wall surfaces 21 on the short sides. The pair of main wall surfaces 21 on the short sides represent the left and right surfaces of the container 1, whereas the pair of main wall surfaces 20 on the long sides represent the front and back surfaces of the container 1. Each of the four main wall surfaces 20 and 21 is formed as either a flat surface, or with a shape that bulges outward with a slight curve. Further, corner portions 22 between adjacent main wall surfaces 20 and 21 are formed with a circular arc shape when viewed in a lateral cross-section.

The side wall upper portion 17 is expanded outward another step beyond the main side wall portion 15, and although being a belt-like shape having a shorter vertical dimension than the main side wall portion 15, is formed with a rectangular lateral cross-sectional shape similar to that of the main side wall portion 15. Further, whereas the main side wall portion 15 has a tapered shape, the side wall upper portion 17 stands substantially vertically, with the flange 12 formed substantially horizontally around the perimeter of the top edge of the side wall upper portion 17.

The side wall upper portion 17 also has four upper wall surfaces 30 and 31. In other words, the side wall upper portion 17 has a pair of upper wall surfaces 30 on the long sides, and a pair of upper wall surfaces 31 on the short sides. The pair of upper wall surfaces 31 on the short sides are positioned above the pair of main wall surfaces 21 on the short sides, and form the left and right side surfaces of the container 1 in combination with the main wall surfaces 21, whereas the pair of upper wall surfaces 30 on the long sides are positioned above the pair of main wall surfaces 20 on the long sides, and form the front and back surfaces of the container 1 in combination with the main wall surfaces 20. In other words, the four wall surfaces that constitute the side surface 11 are composed of the main wall surfaces 20 and 21 of the main side wall portion 15, and the upper wall surfaces 30 and 31 of the side wall upper portion 17. In the side wall upper portion 17, each of the four upper wall surfaces 30 and 31 is formed as either a flat surface, or with a shape that bulges outward with a slight curve, in a similar manner to that described for the main side wall portion 15. Further, corner portions 32 between adjacent upper wall surfaces 30 and 31 are formed with a circular arc shape when viewed in a lateral cross-section.

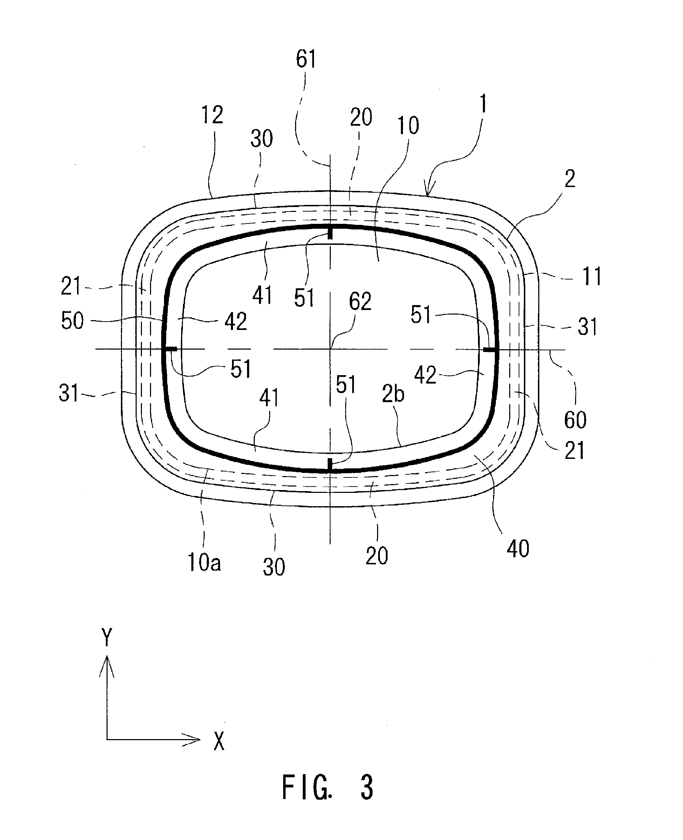

The cylindrical shrink-fit label 2 is fitted to the side surface 11 of this container 1. The shrink-fit label 2 covers substantially all of the side surface 11, and has a top edge 2a that reaches to substantially the top edge of the side wall upper portion 17. In other words, the top edge 2a of the shrink-fit label 2 is positioned substantially directly below the flange 12. Further, a prescribed lower region of the shrink-fit label 2 wraps from the side surface 11 around to the bottom surface 10 to cover the peripheral edge of the bottom surface 10, so that a bottom edge 2b of the shrink-fit label 2 is positioned on the bottom surface 10 of the container 1. This portion of the shrink-fit label 2 that covers the peripheral edge of the bottom surface 10 is termed the bottom surface-covering portion 40. This bottom surface-covering portion 40 is composed of four side portions 41 and 42 which correspond with the four wall surfaces of the side surface 11 of the container 1. Because the side surface 11 of the container 1 appears rectangular when viewed in a lateral cross-section, the four side portions 41 and 42 of the bottom surface-covering portion 40 are composed of a pair of long side portions 41 and a pair of short side portions 42. In FIG. 3 and the like, the direction across which the pair of short side portions 42 face each other is deemed the X-axis, and the direction across which the pair of long side portions 41 face each other is deemed the Y-axis.

Marks for detecting positional displacement of the shrink-fit label 2 relative to the container 1 are formed on the bottom surface-covering portion 40. Specifically, a longitudinal direction detection mark 50 for detecting positional displacement of the shrink-fit label 2 in the longitudinal direction (the axial direction) relative to the container 1, and lateral direction detection marks 51 for detecting positional displacement of the shrink-fit label 2 in the lateral direction (the circumferential direction) relative to the container 1 are formed. The longitudinal direction detection mark 50 and the lateral direction detection marks 51 are indicated in the figures by dark black markings.

The longitudinal direction detection mark 50 is formed as a line that extends around the bottom edge 2b of the shrink-fit label 2, and because the line is formed around the entire perimeter, the overall mark forms a ring shape. More specifically, the longitudinal direction detection mark 50 is formed parallel to the bottom edge 2b of the shrink-fit label 2 along a line separated about several mm from the bottom edge 2b, and although the thickness of the mark is arbitrary, a typical thickness is about 1 mm.

Further, the lateral direction detection marks 51 are formed as lines that extend in a direction substantially orthogonal to the bottom edge 2b of the shrink-fit label 2, namely lines for which both side edges extend in a direction substantially orthogonal to the bottom edge 2b of the shrink-fit label 2. One of these lateral direction detection marks 51 is formed on each of the four side portions 41 and 42 that constitute the bottom surface-covering portion 40, with each mark being formed in the central region in the lateral direction of the respective side portion 41 or 42. In other words, the lateral direction detection marks 51 formed on the pair of long side portions 41 extend in the Y-axis direction and face each other, and the lateral direction detection marks 51 formed on the pair of short side portions 42 extend in the X-axis direction and face each other. In the present embodiment, each of the lateral direction detection marks 51 is designed to be positioned in the center in the lateral direction of one of the side portions 41 or 42. Accordingly, the lateral direction detection marks 51 formed on the pair of long side portions 41 are provided in positions which bisect the perimeter of the cylindrical shrink-fit label 2, and the lateral direction detection marks 51 formed on the pair of short side portions 42 are also provided in positions which bisect the perimeter of the cylindrical shrink-fit label 2. These lateral direction detection marks 51 are each formed so as to protrude inward, namely toward the bottom edge 2b of the shrink-fit label 2, from the longitudinal direction detection mark 50, and are formed in an integrated manner with the longitudinal direction detection mark 50. The tips of the lateral direction detection marks 51 do not reach the bottom edge 2b of the shrink-fit label 2, but are rather slightly separated from the bottom edge 2b. Further, the length of each of the lateral direction detection marks 51 (namely, the distance of protrusion from the longitudinal direction detection mark 50) is, for example, from about several mm to several tens of mm.

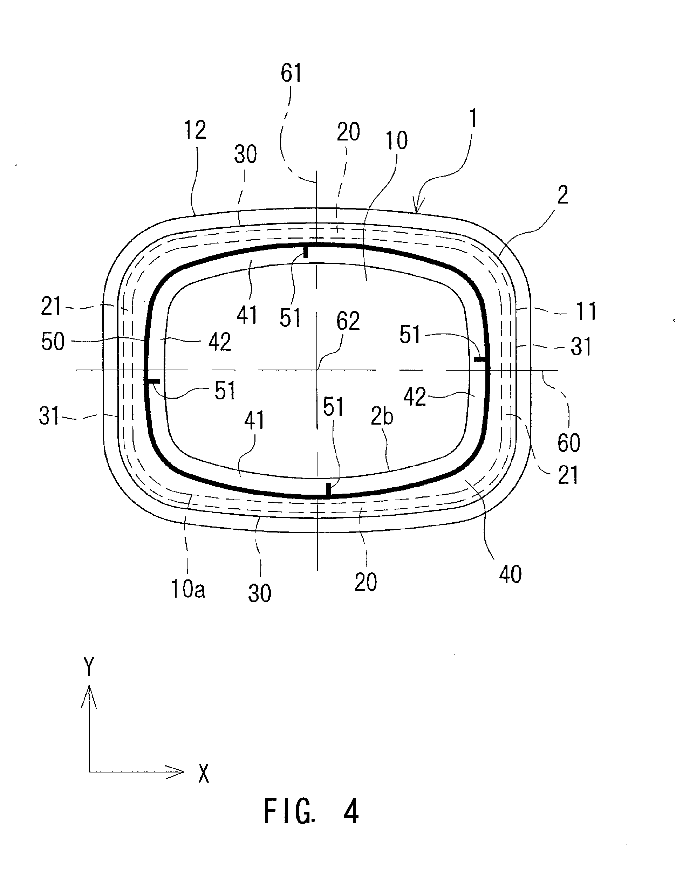

In FIG. 3 and FIG. 4, the reference sign 60 indicates a center line which joins the lateral direction centers of the pair of short side portions 42 and extends in the X-axis direction, the reference sign 61 indicates a center line which joins the lateral direction centers of the pair of long side portions 41 and extends in the Y-axis direction, and the reference sign 62 is the point of intersection between the X-axis direction center line 60 and the Y-axis direction center line 61. FIG. 3 is a bottom view illustrating the state where the shrink-fit label 2 has been fitted precisely in the prescribed position, whereas FIG. 4 illustrates a state where the shrink-fit label 2 has been fitted with a prescribed amount of positional displacement in the lateral direction. In a similar manner to FIG. 4, FIG. 6 to FIG. 8 also illustrate cases where the shrink-fit label 2 has been fitted with a prescribed amount of positional displacement. As illustrated in FIG. 3, when the shrink-fit label 2 is fitted as designed, the lateral direction detection marks 51 formed on the pair of long side portions 41 are both positioned on the Y-axis direction center line 61, and the lateral direction detection marks 51 formed on the pair of short side portions 42 are both positioned on the X-axis direction center line 60. In contrast, as illustrated in FIG. 4, when the shrink-fit label 2 is positionally displaced in the lateral direction, the lateral direction detection marks 51 formed on the pair of long side portions 41 exist in positions offset by a prescribed amount in the X-axis direction from the Y-axis direction center line 61, with the direction of the offset opposite for the two marks, meaning the two marks adopt a positional relationship having point symmetry relative to the point of intersection 62, and a positional relationship separated by 180 degrees across the cylindrical shrink-fit label 2. Further, the lateral direction detection marks 51 formed on the pair of short side portions 42 also exist in positions offset by a prescribed amount in the Y-axis direction from the X-axis direction center line 60, with the direction of the offset opposite for the two marks, meaning the two marks adopt a positional relationship having point symmetry relative to the point of intersection 62, and a positional relationship separated by 180 degrees across the cylindrical shrink-fit label 2. In other words, each of the four lateral direction detection marks 51 exists in a position displaced by a prescribed amount in the same circumferential direction (lateral direction) relative to the X-axis direction center line 60 or the Y-axis direction center line 61.

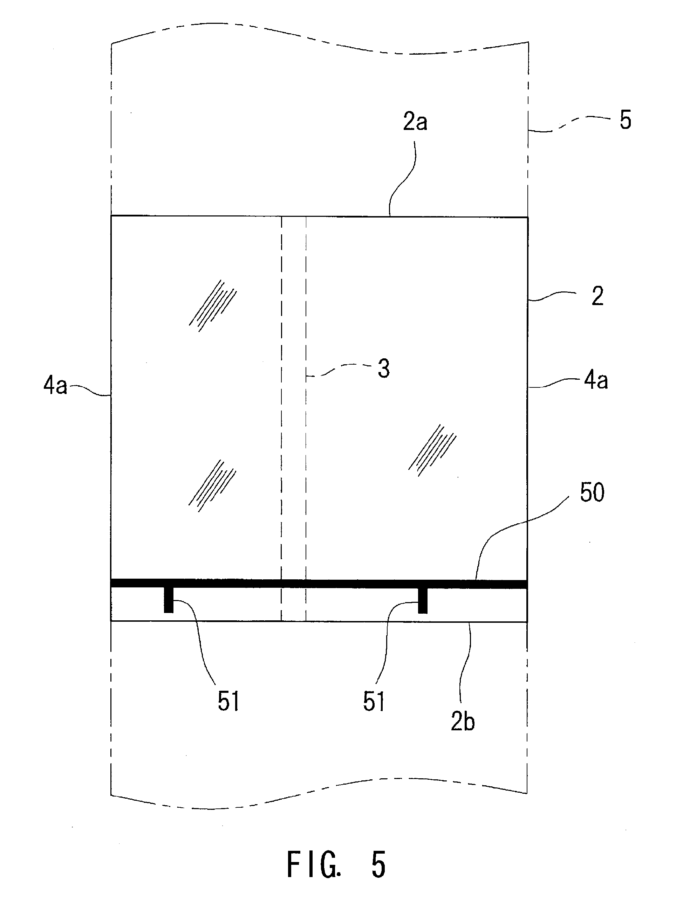

The shrink-fit label 2 prior to fitting to the container 1 is illustrated in FIG. 5. The shrink-fit label 2 is formed, for example, by cutting a long raw film to a prescribed width to form a long shrink-fit film, bonding together the two side edges of the long shrink-fit film to form a cylinder, thereby forming a long cylindrical label body 5 such as that illustrated by the two-dot chain line in FIG. 5, and then cutting this long label body 5 into predetermined lengths. In FIG. 5, the reference sign 3 indicates the overlapped portion where the two side edges of the shrink-fit film are bonded together. Further, in a flattened state, the long label body 5 has folds 4a formed along both side edges.

A prescribed region at the bottom edge of the shrink-fit label 2 in the axial direction functions as the portion that becomes the bottom surface-covering portion 40 that covers the bottom surface 10 of the container 1, and the longitudinal direction detection mark 50 and the lateral direction detection marks 51 are formed on that portion. The longitudinal direction detection mark 50 is formed parallel to the bottom edge 2b of the shrink-fit label 2 and extends around the entire perimeter in the circumferential direction, whereas the lateral direction detection marks 51 are formed so as to protrude from the longitudinal direction detection mark 50 toward the bottom edge 2b in the axial direction of the shrink-fit label 2. The cylindrical shrink-fit label 2 is provided with one pair of lateral direction detection marks 51 formed in positions that bisect the perimeter of the shrink-fit label 2, and another pair of lateral direction detection marks 51 formed in positions that further bisect the regions between the first pair of lateral direction detection marks 51. In other words, the lateral direction detection marks 51 are formed in positions that divide the perimeter of the shrink-fit label 2 into four equal quarters, meaning a total of four lateral direction detection marks 51 are formed on the shrink-fit label 2. The pair of lateral direction detection marks 51 that are formed in positions that bisect the perimeter of the shrink-fit label 2 are positioned in locations corresponding with the pair of long side portions 41 of the bottom surface-covering portion 40, and the other pair of lateral direction detection marks 51 that are formed in positions that further bisect the regions between the first pair of lateral direction detection marks 51 are positioned in locations corresponding with the pair of short side portions 42 of the bottom surface-covering portion 40.

The shrink-fit label 2 has a so-called reverse-printed structure in which a printed display layer composed of text or a design or the like is laminated to the inner surface of the film base material, and a white printed layer is then laminated to the inner surface of the printed display layer, thereby enabling the printed display layer to be viewed from outside the container through the transparent film base material. The printed display layer and the white printed layer can be formed on the aforementioned raw film using a printing technique such as gravure printing, and the longitudinal direction detection mark 50 and the lateral direction detection marks 51 can be formed during the formation of these layers. The longitudinal direction detection mark 50 and the lateral direction detection marks 51 are preferably black. Further, in order to ensure that the longitudinal direction detection mark 50 and the lateral direction detection marks 51 are formed in a state of high contrast, the surrounding color (background color) is preferably white. Accordingly, it is preferable that a white printed layer is used as a background layer, with the longitudinal direction detection mark 50 and the lateral direction detection marks 51 formed on the outer surface side of this background layer together with the printed display layer.

A variety of different films may be used for the film base material of the shrink-fit label 2, and examples include films composed of polyolefins such as polyethylene (PE) and polypropylene (PP), polyesters such as polyethylene terephthalate (PET) and polybutylene terephthalate (PBT), and other resins such as polystyrene (PS), polylactic acid (PLA), polyamide and polyvinyl chloride. Among these, from the viewpoints of having appropriate compressive stress and a high degree of transparency, polyester-based, polylactic acid-based and polystyrene-based films are preferable, and polyester-based films are particularly preferred. Further, films containing a resin mixture composed of a mixture of two or more of these resins may also be used, and laminated films composed of two or more laminated films may also be used. Furthermore, a uniaxially stretched film that shrinks mainly in the circumferential direction of the cylindrical shrink-fit label 2 may be used, or a biaxially stretched film that also shrinks in the axial direction may be used. The heat shrinkage rate in the main stretching direction of the film, namely the shrinkage rate in the circumferential direction of the cylindrical shrink-fit label 2, when immersed in 90°C hot water for 10 seconds is preferably from 20 to 80%, and more preferably from 30 to 80%.

As mentioned above, the main side wall portion 15 of the container 1 is a tapered shape that widens as it extends upward, and the side wall upper portion 17 is a step wider than the main side wall portion 15, and therefore the amount of shrinkage of the shrink-fit label 2 is smallest at the side wall upper portion 17, while the amount of shrinkage at the main side wall portion 15 is larger than that observed at the side wall upper portion 17 and increases in the downward direction. Accordingly, a delayed tack adhesive is preferably applied to a prescribed region in the upper portion of the inner surface of the shrink-fit label 2 using gravure printing or the like. This adhesive is activated by the heat used during shrinkage, thereby bonding the shrink-fit label 2 to the side wall upper portion 17 and preventing positional displacement of the shrink-fit label 2 in the vertical direction. The adhesive may be formed as desired in this prescribed region in the upper portion of the inner surface of the shrink-fit label 2, but rather than forming the applied region to which the adhesive has been applied continuously in the circumferential direction around the entire perimeter of the shrink-fit label 2, it is preferable that applied regions of a prescribed length and non-applied regions to which the adhesive has not been applied are formed in an alternating manner around the circumferential direction, as this enables blocking of the inner surfaces to be prevented when the shrink-fit label 2 is in a flat folded state. When applied regions and non-applied regions are formed in an alternating manner around the circumferential direction, it is preferable that the line formed around the circumferential direction is formed as two vertically separated lines, with the applied regions formed in a staggered arrangement across the upper line and the lower line.

The manufacturing method for the container with a shrink-fit label includes a step of fitting the shrink-fit label 2 to the side surface 11 of the container 1, a step of heat-shrinking and fitting the shrink-fit label 2 to the container 1 so that the longitudinal direction detection mark 50 and the lateral direction detection marks 51 are positioned on the bottom surface-covering portion 40 of the shrink-fit label 2, and a step of detecting positional displacement in the longitudinal direction and positional displacement in the lateral direction of the shrink-fit label 2 fitted to the container 1. For example, the container 1 is transported by a transport device such as a conveyor in an inverted state, namely with the bottom surface 10 facing upward, and the shrink-fit label 2 is fitted onto the side surface 11 of the container 1 from above. Upon fitting to the side surface 11 of the container 1, the shrink-fit label 2 protrudes by a prescribed length above the bottom surface 10, and the longitudinal direction detection mark 50 and the lateral direction detection marks 51 are positioned on this protruding portion. The shrink-fit label 2 is then heated using a heating device such as a hot air heater, causing the shrink-fit label 2 to undergo heat shrinkage and adhere tightly to the side surface 11, with the aforementioned protruding portion mainly forming the bottom surface-covering portion 40 that covers the bottom surface 10 of the container 1. The method then proceeds to the detection step.

Next is a description of the method used in the detection step for detecting positional displacement of the shrink-fit label 2 fitted to the container 1. The container 1 with the fitted shrink-fit label 2 is transported in an inverted state. In other words, the container 1 is transported by a transport device such as a conveyor with the bottom surface 10 facing upward and the flange 12 facing downward. An illumination device for irradiating light onto the container 1 from above and an imaging device for acquiring an image of the container 1 from above are provided at a prescribed location along the transport path, and any positional displacement of the shrink-fit label 2 is detected on the basis of the image data acquired by the imaging device. Specifically, a container in which the shrink-fit label 2 has been fitted precisely in the prescribed position with effectively no positional displacement is transported as a reference item, an image of the reference item is acquired by the imaging device, the position of the longitudinal direction detection mark 50 and the positions of the lateral direction detection marks 51 are measured from the image data of the reference item and recorded as reference values, an inspection is then performed to ascertain whether or not positional displacements from these reference values fall within prescribed ranges, namely within permissible ranges, and positional displacements that fall within the permissible ranges are adjudged OK, whereas positional displacements outside the ranges are adjudged NG. Transport of OK items is continued, whereas NG items are removed from the transport path.

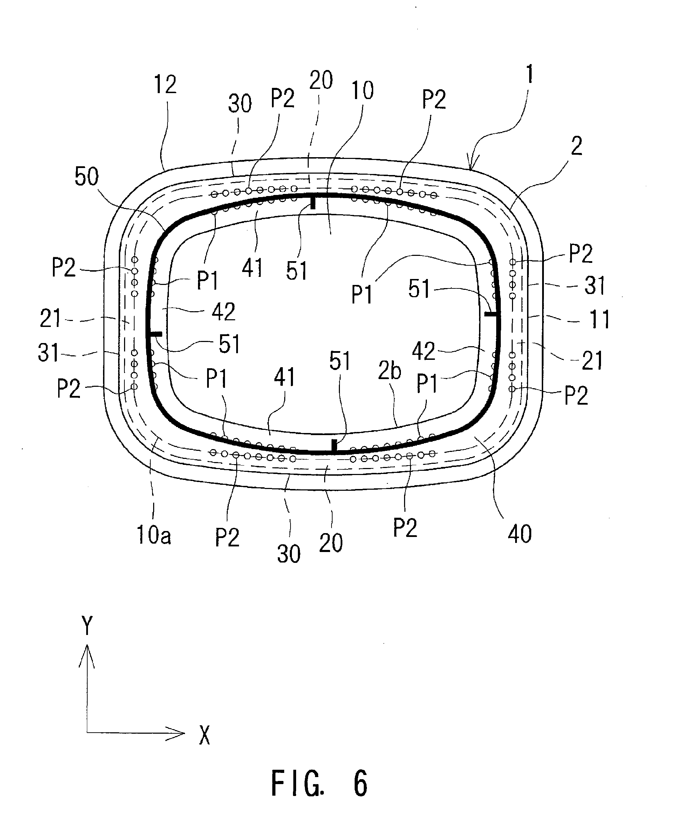

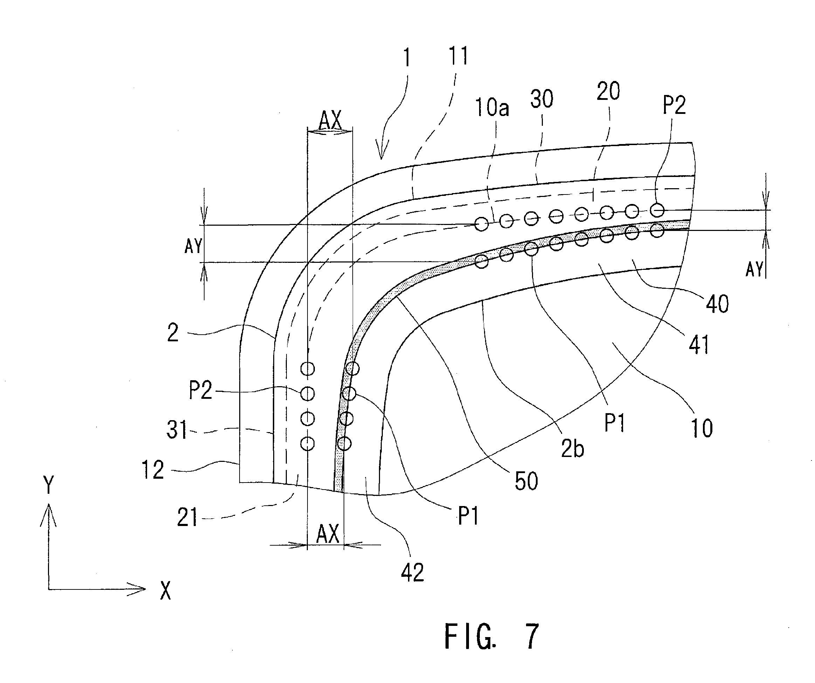

FIG. 6 and FIG. 7 illustrate the detection of positional displacement in the longitudinal direction. On each of the side portions 41 and 42 of the bottom surface-covering portion 40, the position of the inner edge of the longitudinal direction detection mark 50 and the position of the peripheral edge 10a of the bottom surface 10 of the container 1 are distinguished and identified on the basis of differences in intensity, and the separation distance between the two positions is calculated. In FIG. 6 and FIG. 7, measurement points P1 for the inner edge of the longitudinal direction detection mark 50 and measurement points P2 for the peripheral edge 10a of the bottom surface 10 are indicated as circles, with a plurality of these measurement points P1 and P2 provided on each of the side portions 41 and 42, and the regions outside the corner portions between the side portions 41 and 42 acting as the measurement regions. Based on the XY coordinates of each measurement point P1 or P2, a separation distance (AX) in the X-axis direction is calculated on the short side portions 42 and a separation distance (AY) in the Y-axis direction is calculated on the long side portions 41, as illustrated in FIG. 7. Then, the maximum value and the minimum value for the separation distance are determined for each of the side portions 41 and 42, and a judgment is made as to whether or not the maximum value and the minimum value fall within the permissible range. If the shrink-fit label 2 is positionally displaced downward relative to the container 1, namely toward the bottom surface 10, then the separation distance increases, whereas if the shrink-fit label 2 is positionally displaced upward relative to the container 1, namely toward the flange 12, then the separation distance decreases. Accordingly, by measuring the separation distance from the inner edge of the longitudinal direction detection mark 50 to the peripheral edge 10a of the bottom surface 10, positional displacement of the shrink-fit label 2 in the longitudinal direction relative to the container 1 can be detected. Because the separation distance is measured on each of the side portions 41 and 42, detection is possible of not only the case in which the entire shrink-fit label 2 is positionally displaced, but also those cases in which the shrink-fit label 2 is tilted relative to the container 1. Moreover, because a plurality of the measurement points P1 or P2 are used on each of the side portions 41 and 42, even in those cases in which the bottom surface-covering portion 40 of the shrink-fit label 2 is locally distorted at a specific location on either a long side portion 41 or a short side portion 42, this distorted state is reflected in the maximum value and the minimum value and can therefore easily be detected.

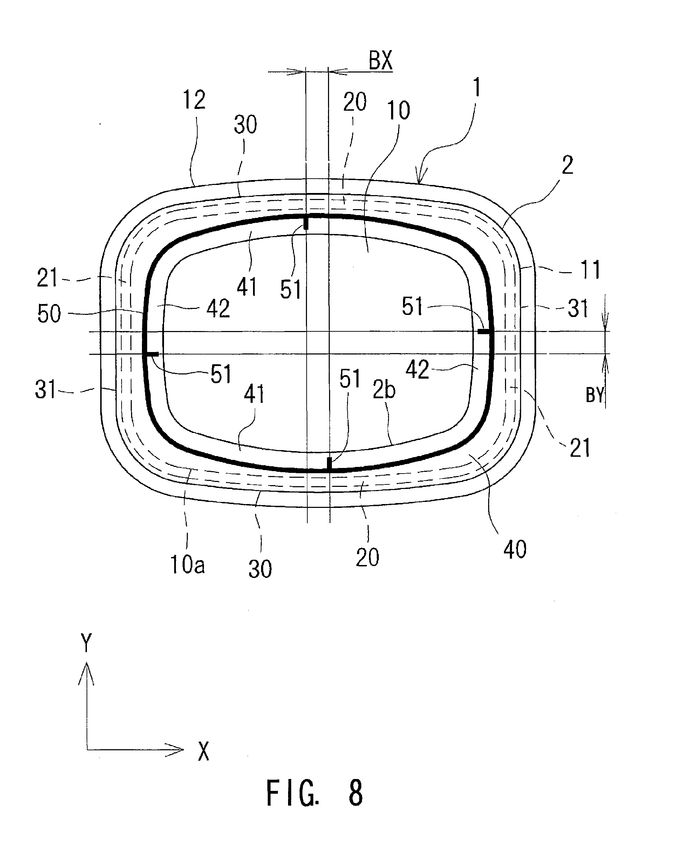

On the other hand, positional displacement of the shrink-fit label 2 in the lateral direction relative to the container 1 is detected in the manner described below. In other words, the center position of each lateral direction detection mark 51 is identified from the image data, and the XY coordinates of the center position are determined. The center position of each lateral direction detection mark 51 is the position that is in the center of the mark along the protrusion direction from the longitudinal direction detection mark 50, and in the center of the mark across the width direction of the lateral direction detection mark 51. Then, as illustrated in FIG. 8, a distance (BX) in the X-axis direction between the two lateral direction detection marks 51 on the pair of long side portions 41 is calculated, and a judgment is made as to whether or not that distance is within a permissible range relative to the reference value. Further, a distance (BY) in the Y-axis direction between the two lateral direction detection marks 51 on the pair of short side portions 42 is calculated, and a judgment is made as to whether or not that distance is within a permissible range relative to the reference value. In the present embodiment, the design positions for the lateral direction detection marks 51 fall on the center lines 60 and 61, and in the reference item, the distance (BX) in the X-axis direction between the two lateral direction detection marks 51 and the distance (BY) in the Y-axis direction between the two lateral direction detection marks 51 are both effectively zero. Accordingly, for the reference item, BX=0 and BY=0, and in the present embodiment, a quality judgment can be made on the basis of whether or not the measured values (absolute values) for BX and BY fall within permissible ranges. Further, as described above, because the positional displacement of the shrink-fit label 2 in the lateral direction can be detected from the distance between the lateral direction detection marks 51 provided on each opposing pair of side portions 41 and 42, the positional displacement of the shrink-fit label 2 in the lateral direction is magnified two-fold in the measured value, meaning detection can be performed with a high degree of precision. Moreover, because detection can be performed in two directions, on the side of the long side portions 41 and the side of the short side portions 42, the detection can be performed with an even higher degree of precision. Further, because the lateral direction detection marks 51 are positioned in the central region in the lateral direction of the side portions 41 and 42, variation in the measurements is less likely to occur than in the case where the lateral direction detection marks 51 are positioned in the vicinity of the corner portions between the side portions 41 and 42.

When detecting positional displacement in the longitudinal direction and positional displacement in the lateral direction, if the container 1 itself has been rotated relative to the imaging device so that the direction across the opposing short side portions 42 is tilted relative to the X-axis of the imaging device, then a tilt correction may be performed.

Further, in the present embodiment, a description was provided of the case where the design positions for the lateral direction detection marks 51 fell on the center lines 60 and 61, but the design positions need not necessarily fall on the center lines 60 and 61, and provided the lateral direction detection marks 51 exist in the central regions in the lateral direction of the side portions 41 and 42, measurements can be performed with good precision. For example, the design positions for the lateral direction detection marks 51 may be in positions positionally displaced by a prescribed amount in the lateral direction (circumferential direction) from the center lines 60 and 61, as illustrated in FIG. 4. Even in this case, a quality judgment can be made by measuring and calculating the distance (BX) in the X-axis direction between two of the lateral direction detection marks 51 and the distance (BY) in the Y-axis direction between two of the lateral direction detection marks 51, and then determining whether or not the measured distances are within permissible ranges relative to the reference values. Moreover, in this type of case, by calculating the distance in the X-axis direction or the Y-axis direction between a pair of opposing lateral direction detection marks 51, the directionality of the positional displacement of the shrink-fit label 2 in the lateral direction may also be determined. For example, when the distance (BX) in the X-axis direction or the distance (BY) in the Y-axis direction is smaller than the respective reference value, the shrink-fit label 2 has been positionally displaced by rotation in the clockwise direction in FIG. 8. In contrast, when the distance (BX) in the X-axis direction or the distance (BY) in the Y-axis direction is larger than the respective reference value, the shrink-fit label 2 has been positionally displaced by rotation in the anticlockwise direction in FIG. 8. Accordingly, by determining the size of the distance relative to the reference value, the directionality of the positional displacement of the shrink-fit label 2 in the lateral direction can also be detected.

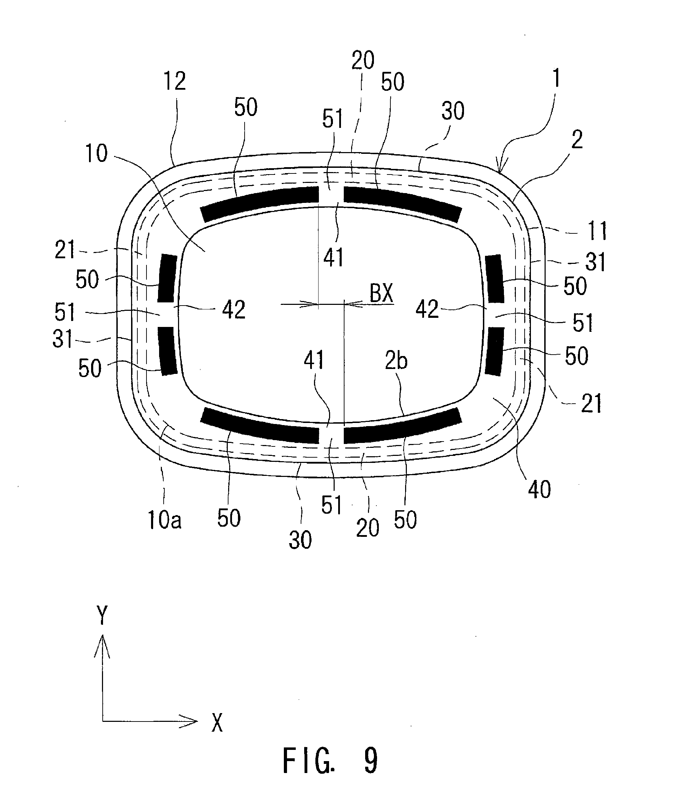

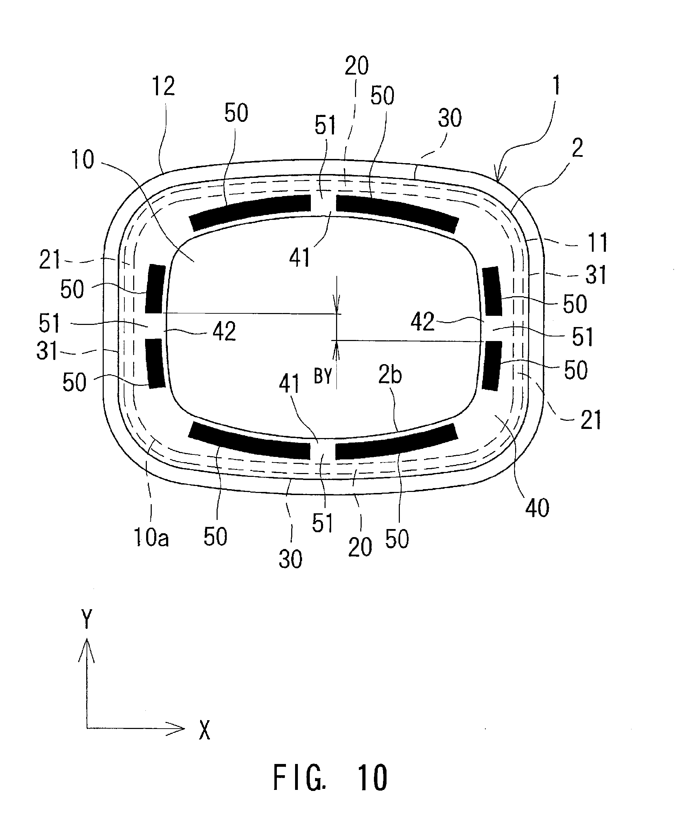

Further, in the embodiment described above, the longitudinal direction detection mark 50 was formed as a ring shape that extended around the entire perimeter of the label, but the mark need not be formed around the entire perimeter. For example, as illustrated in FIG. 9 and FIG. 10, the longitudinal direction detection mark 50 may be formed as a series of lines of prescribed length around the bottom edge 2b of the shrink-fit label 2. Moreover, the thickness of the line that constitutes the longitudinal direction detection mark 50 may be increased, and blank portions may be formed by not forming parts of the longitudinal direction detection mark 50, with those blank portions acting as the lateral direction detection marks 51. Specifically, as illustrated in FIG. 9 and FIG. 10, the longitudinal direction detection mark 50 may be partially not formed in the central region in the lateral direction of each of the side portions 41 and the side portions 42, thus forming a series of blank portions, and these blank portions may be used as the lateral direction detection marks 51. The left and right side edges of these lateral direction detection marks 51 formed from blank portions correspond with the side edges (in the circumferential direction) of the longitudinal direction detection mark 50, and the positions of these side edges of the lateral direction detection marks 51 are measured. It is desirable that the longitudinal direction detection mark 50 and the lateral direction detection marks 51 formed from the blank portions are formed in a state of high contrast, in a similar manner to that described for the above embodiment. In this case also, the side edges of the lateral direction detection marks 51 extend in a substantially orthogonal direction relative to the bottom edge 2b of the shrink-fit label 2, and therefore the positions of the side edges can be readily identified. Moreover, in a similar manner to the embodiment described above, the center position of each of the lateral direction detection marks 51 may be identified from the image data, the XY coordinates of the center position then determined, and the distance (BX) in the X-axis direction and the distance (BY) in the Y-axis direction calculated between opposing pairs of the lateral direction detection marks 51. Alternatively, the position of one of the left and right side edges of each lateral direction detection mark 51 may be detected. For example, as shown in FIG. 9, the position of one side edge of the lateral direction detection mark 51 on one long side portion 41, and the position of one side edge of the lateral direction detection mark 51 on the other long side portion 41 are detected, and the distance (BX) in the X-axis direction between the two side edges is calculated and compared with a reference value. Similarly, as shown in FIG. 10, the position of one side edge of the lateral direction detection mark 51 on one short side portion 42, and the position of one side edge of the lateral direction detection mark 51 on the other short side portion 42 are detected, and the distance (BY) in the Y-axis direction between the two side edges is calculated and compared with a reference value. By making an OK/NG judgment based on the deviation from the reference value, positional displacement of the shrink-fit label 2 in the lateral direction can be detected. Moreover, in this case, positional displacement of the shrink-fit label 2 in the longitudinal direction can be detected in a similar manner to that described above, by measuring the distance between the inner edge of the longitudinal direction detection mark 50 and the peripheral edge 10a of the bottom surface 10. In FIG. 10, the longitudinal direction detection mark 50 is not provided in the corner portions, but may also be provided in the corner portions if desired. Further, in a similar manner to the embodiment described above, the lateral direction detection marks 51 formed from blank portions may be provided on only one of the long side portions 41 and the short side portions 42. Furthermore, both the left and right side edges of the lateral direction detection marks 51 may be detected.

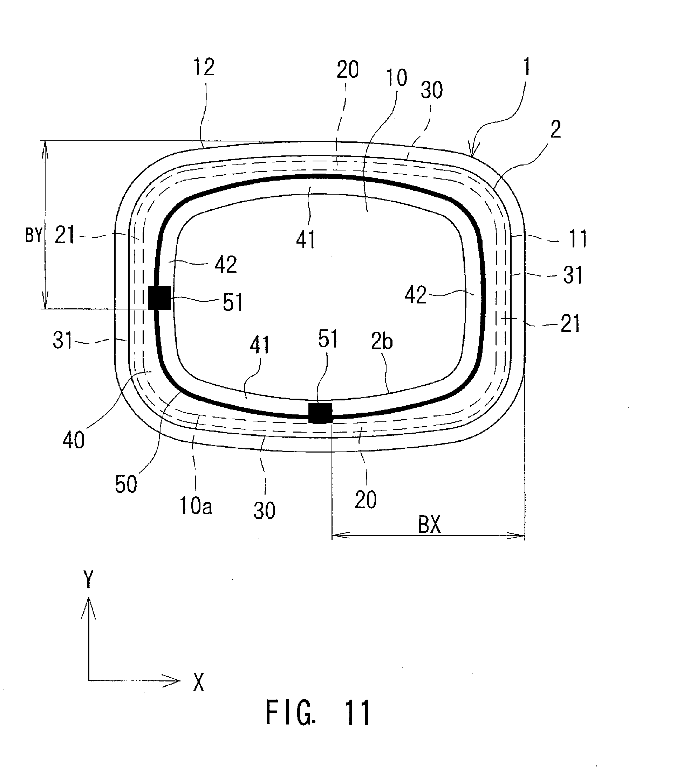

Furthermore, as illustrated in FIG. 11, the longitudinal direction detection mark 50 may be formed as a ring shape, and lateral direction detection marks 51 having, for example, a rectangular shape may then be formed at prescribed locations around the circumferential direction of the ring shape. In one example, lateral direction detection marks 51 may be formed in one location on a long side portion 41 and one location on a short side portion 42. Further, the rectangular lateral direction detection marks 51 preferably have a portion that protrudes inside the longitudinal direction detection mark 50, as this ensures that the length of the side edges of the lateral direction detection marks 51 can be maintained, thereby improving the measurement precision. Then, positional displacement of the shrink-fit label 2 in the lateral direction can be detected by measuring the distance (BX) in the X-axis direction from the side edge of the lateral direction detection mark 51 on the long side portion 41 to the outside edge of the flange 12, and the distance (BY) in the Y-axis direction from the side edge of the lateral direction detection mark 51 on the short side portion 42 to the outside edge of the flange 12, and then comparing the measured values with reference values. Either of the two side edges of each lateral direction detection mark 51 may be used for the measurement, or both side edges may be measured and the center position of the lateral direction detection mark 51 then identified. In this manner, the distances from the lateral direction detection marks 51 to the outside edges of the flange 12 may be measured, and this technique may also be used in the embodiments illustrated in FIG. 8, and FIG. 9 and FIG. 10. Measurements may also be performed to the side surface 11 (for example, the side wall upper portion 17) rather than to the outside edge of the flange 12, and any edge of the container 1 may be used. However, rather than using an edge of the container 1, measuring the distance between the lateral direction detection marks 51 as illustrated in FIG. 8, FIG. 9 and FIG. 10 enables measurements of greater precision. Because the lateral direction detection marks 51 are formed on the bottom surface-covering portion 40, the image can be more easily focused, meaning a higher precision detection with minimal variation is possible.

Further, a method such as that illustrated in FIG. 8, and FIG. 9 and FIG. 10, in which the distance between a pair of opposing lateral direction detection marks 51 is measured, and a method such as that illustrated in FIG. 11, in which the distance from a lateral direction detection mark 51 to an edge of the container 1 (for example, the outside edge of the flange 12) is measured, may also be used in combination. For example, when the shrink-fit label 2 is fitted to the container 1, if the shrink-fit label 2 is fitted with a positional displacement in the lateral direction relative to the container 1, then a state such as that illustrated in FIG. 4 is obtained, in which the shrink-fit label 2 is positionally displaced in the lateral direction in a substantially uniform manner around the entire perimeter. When the shrink-fit label 2 is positionally displaced in the lateral direction in a substantially uniform manner around the entire perimeter in this manner, then as illustrated in FIG. 8, FIG. 9 and FIG. 10, a method in which the distance (BX) in the X-axis direction between the pair of lateral direction detection marks 51 that face each other across the Y-axis direction, and the distance (BY) in the Y-axis direction between the pair of lateral direction detection marks 51 that face each other across the X-axis direction are measured is preferable, and as mentioned above, the measurement precision in this method is high.

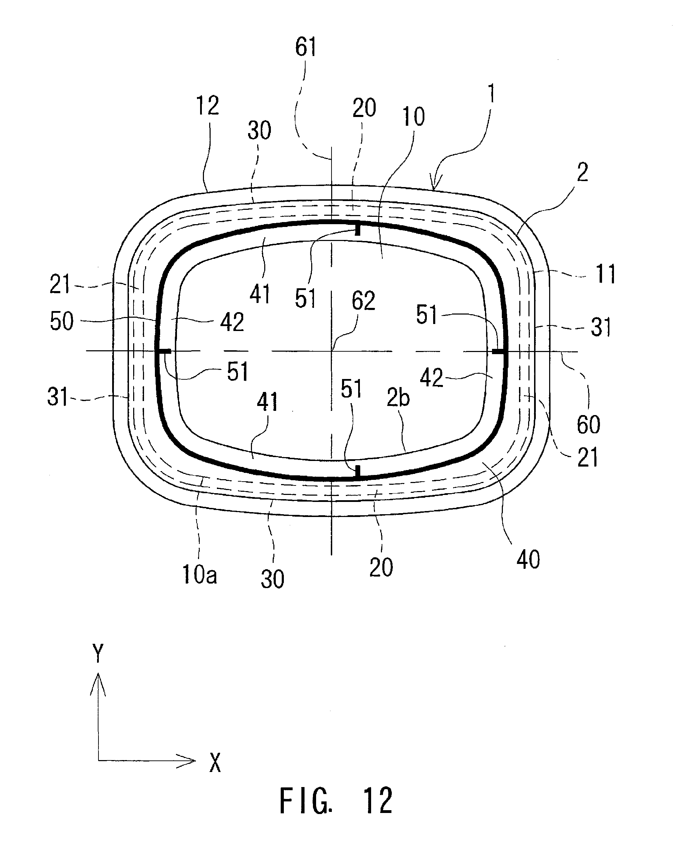

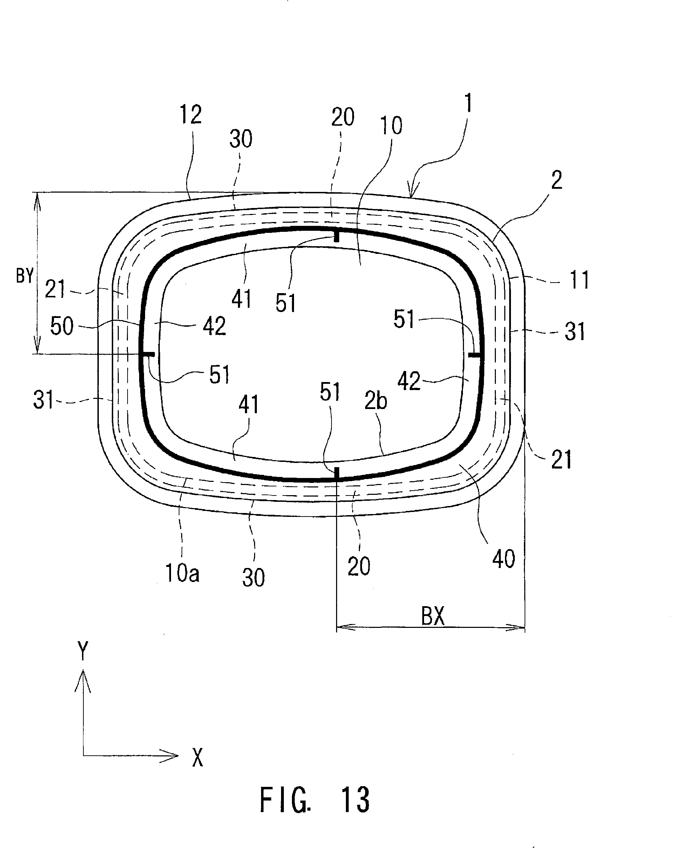

On the other hand, when the shrink-fit label 2 does not undergo uniform heat shrinkage around the entire perimeter of the label, meaning the amount of shrinkage at one location in the circumferential direction of the shrink-fit label 2 is greater than the mount of shrinkage in another location, the design of the shrink-fit label 2 is positionally displaced toward the location in which the amount of shrinkage is greater. For example, in the case illustrated in FIG. 12, when the amount of shrinkage on the right side of the figure is greater than the amount of shrinkage on the left side, the pair of direction detection marks 51 that face each other across the Y-axis direction, namely the lateral direction detection marks 51 on the pair of long side portions 41, are both positionally displaced toward the right side in the figure. In the type of case illustrated in FIG. 12, even if the distance (BX) in the X-axis direction between the pair of lateral direction detection marks 51 that face each other across the Y-axis direction, and the distance (BY) in the Y-axis direction between the pair of lateral direction detection marks 51 that face each other across the X-axis direction are measured, the inspection results are BX=0 and BY=0 which would indicate no positional displacement in the lateral direction. Accordingly, in this type of situation, it is preferable to employ the latter method mentioned above, namely the method in which the distance from each lateral direction detection mark 51 to the edge of the container 1 is measured. For example, as illustrated in FIG. 13, by measuring the distance (BX) in the X-axis direction between either one of the lateral direction detection marks 51 on the pair of long side portions 41 and the outside edge of the flange 12, and the distance (BY) in the Y-axis direction between either one of the lateral direction detection marks 51 on the pair of short side portions 42 and the outside edge of the flange 12, and then comparing these measurements with the respective reference values, the positional displacement of the shrink-fit label 2 in the lateral direction can be detected.

By combining these two measurement methods, detection of positional displacement can be achieved in both the case in which the shrink-fit label 2 is positionally displaced in the lateral direction in a substantially uniform manner around the entire perimeter, and the case in which the shrink-fit label 2 does not undergo uniform heat shrinkage around the entire perimeter of the label, meaning the amount of shrinkage at one location in the circumferential direction of the shrink-fit label 2 is greater than the mount of shrinkage in another location.

In the embodiments described above, examples were described in which the longitudinal direction detection mark 50 was provided together with the lateral direction detection marks 51, but the lateral direction detection marks 51 may also be provided alone. Further, various modifications can be made to the shape, number, and positioning and the like of the lateral direction detection marks 51.

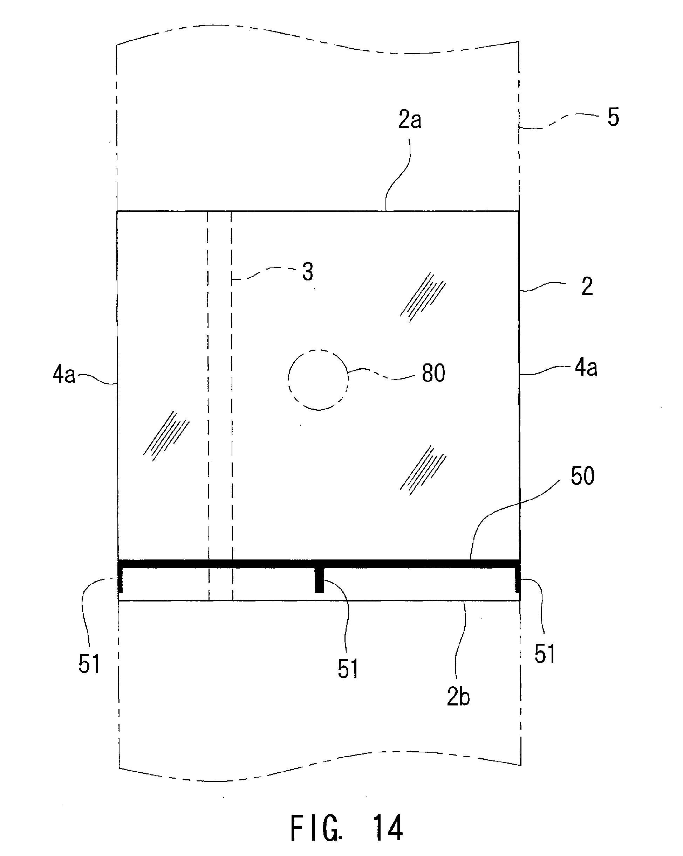

For example, as illustrated in FIG. 14, when the lateral direction detection marks 51 are formed in two locations that bisect the perimeter of the cylindrical shrink-fit label 2, that pair of lateral direction detection marks 51 may be positioned on the folds 4a at the two side edges of the cylindrical shrink-fit label 2 when the label is folded into a flattened state. Then, when additional lateral direction detection marks 51 are formed in two locations that further bisect the regions between the first pair of lateral direction detection marks 51, namely when the lateral direction detection marks 51 are formed in four locations that divide the perimeter of the cylindrical shrink-fit label 2 into four equal quarters, two of the lateral direction detection marks 51 may be positioned on the folds 4a of the cylindrical shrink-fit label 2 when the label is folded into a flattened state, and the remaining two lateral direction detection marks 51 may be positioned in the center across the width direction of the cylindrical shrink-fit label 2 when the label is folded into a flattened state. The two lateral direction detection marks 51 positioned on the folds 4a are positioned on one of the pairs among the pair of long side portions 41 and the pair of short side portions 42 of the bottom surface-covering portion 40, and the two lateral direction detection marks 51 positioned in the center across the width direction of the cylindrical shrink-fit label 2 when the label is folded into a flattened state are positioned on the other pair among the pair of long side portions 41 and the pair of short side portions 42 of the bottom surface-covering portion 40. For example, when the two lateral direction detection marks 51 positioned on the pair of short side portions 42 are disposed on the folds 4a of the cylindrical shrink-fit label 2 when the label is folded into a flattened state, the two lateral direction detection marks 51 positioned on the pair of long side portions 41 are positioned in the center across the width direction of the cylindrical shrink-fit label 2 when the label is folded into a flattened state.

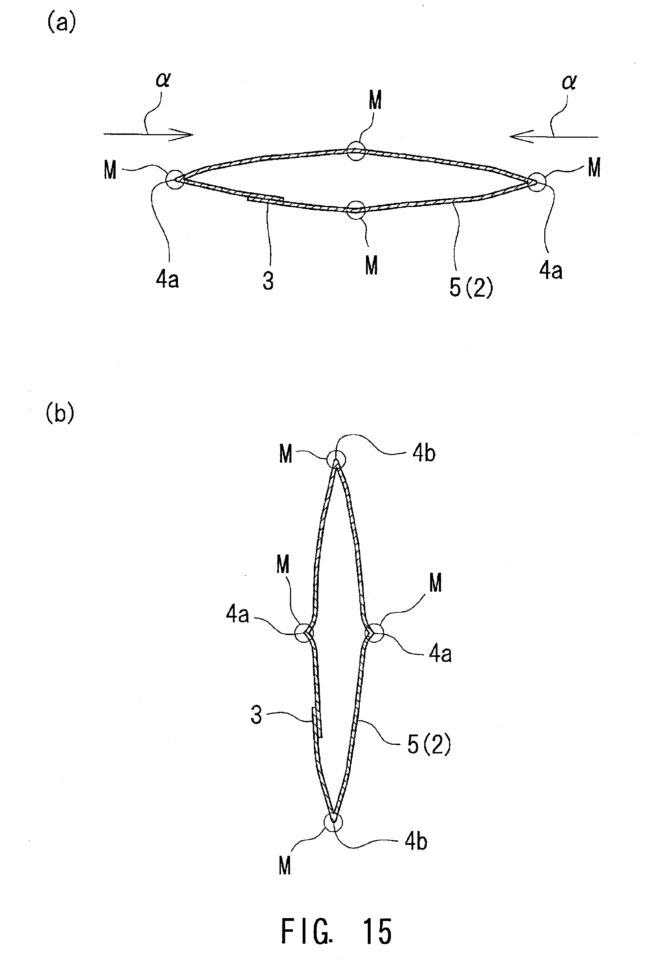

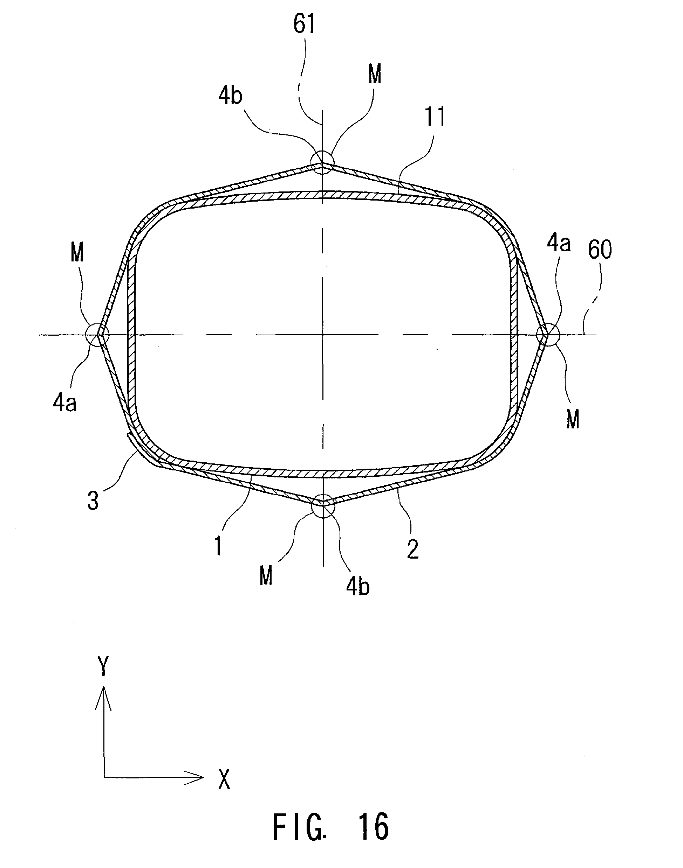

As described above, the long label body 5 formed by bonding together the two side edges of a long shrink-fit film of a prescribed width is folded into a flattened state and wound into a roll for storage and transport. Accordingly, in the flattened state, the folds 4a are formed at the two side edges of the long label body 5, as illustrated in FIG. 15(a). Then, prior to cutting the long label body 5 drawn from the roll into predetermined lengths, a fold back treatment in which the long label body 5 is folded back on itself may be performed partway along the travel path to facilitate the fitting of the label to the container 1. This fold back treatment is a treatment in which the flattened long label body 5 is temporarily opened, and the two side edges from the flattened state are brought together and superimposed as indicated by the arrows α in FIG. 15(a), thereby folding the long label body 5 into a new flattened state. As a result of this fold back treatment, two new folds 4b are formed in the long label body 5 as illustrated in FIG. 15(b), meaning that together with the original two folds 4a, a total of four folds 4a and 4b are formed along the axial direction. In this manner, the four folds 4a and 4b are formed at intervals of about 90° around the circumferential direction, and if, as described above, the two lateral direction detection marks 51 positioned on the pair of short side portions 42 are provided at the positions of the two original folds 4a, then the two lateral direction detection marks 51 positioned on the pair of long side portions 41 are provided at the two newly formed folds 4b. In FIG. 15, and in FIG. 16 which is described below, the locations indicated by the reference sign M represent those positions on the perimeter of the long label body 5 and the shrink-fit label 2 in which the lateral direction detection marks 51 are formed.

Following this type of additional folding to form a flattened state in a direction orthogonal to the original flattened state, the long label body 5 is cut into predetermined lengths to form individual cylindrical shrink-fit labels 2. The shrink-fit label 2 with the four folds 4a and 4b formed therein is expanded with an opener, and when the shrink-fit label 2 is subsequently fitted onto the side surface 11 of the container 1 from the side of the bottom surface 10, the fact that the folds 4a and 4b have been formed in the shrink-fit label 2 means that the portions between each adjacent pair of folds 4a and 4b adhere tightly to the side surface 11, and particularly to the corner portions 22. By positioning the lateral direction detection marks 51 on the folds 4a and 4b in the manner described above, the lateral direction detection marks 51 can be readily positioned in the centers of the long side portions 41 and the short side portions 42. The overlapped portion 3 is formed in a position different from the folds 4a and 4b, and the lateral direction detection marks 51 are preferably formed in positions different from the overlapped portion 3. The fold back treatment described above is not a necessity, and may be omitted if desired.

Furthermore, as illustrated by the two-dot chain line in FIG. 14, in those cases where the shrink-fit label 2 includes a special display portion 80 in which it is desirable that a main design or logo mark or the like is displayed with particular precision in a prescribed location on the side surface 11 of the container 1, it is preferable that a lateral direction detection mark 51 is formed in a position on the perimeter of the shrink-fit label 2 that corresponds with this special display portion 80 (for example, the same position in the lateral direction as the display portion 80).

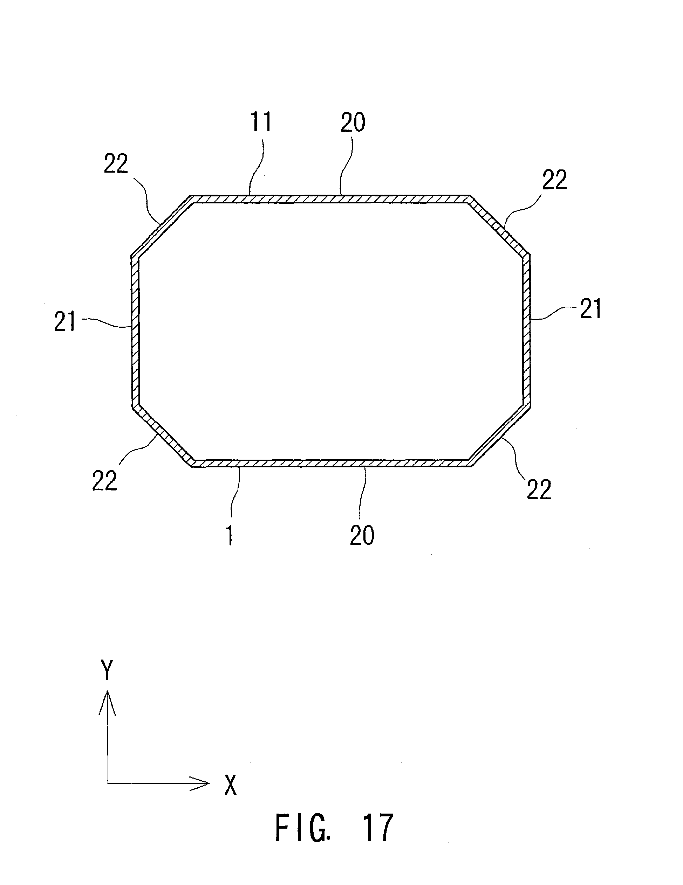

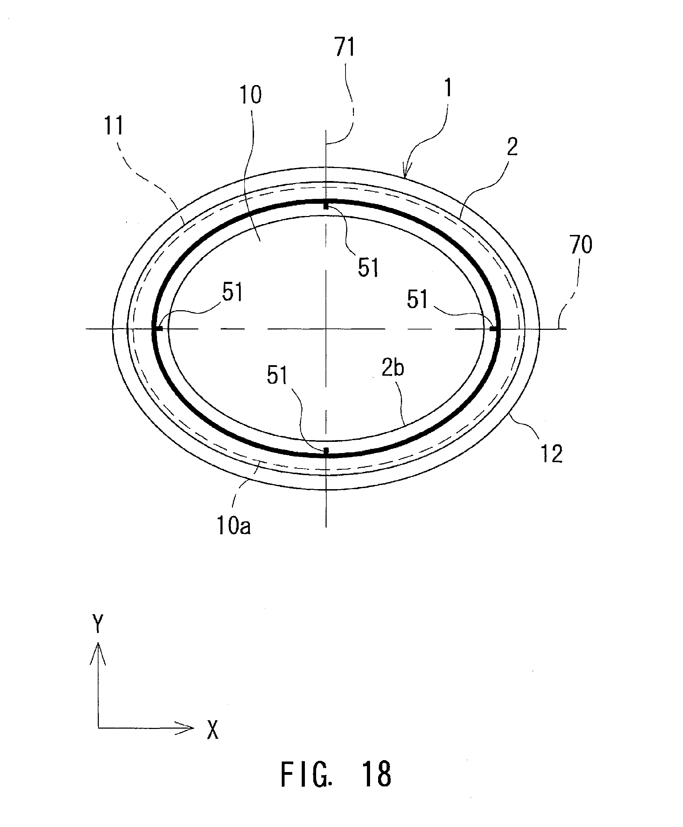

Further, various configurations are also possible for the shape of the container 1, and although in the embodiment described above the corner portions 22 of the side surface 11 of the container 1 had a circular arc shape when viewed in a lateral cross-section, namely an outer convex curve, the corner portions 22 of the side surface 11 may be planar surfaces as illustrated in FIG. 17. Moreover, the invention can be applied to containers having a variety of polygonal shapes besides the rectangular cross-sectional shape described above, including containers having a square shape when viewed in a lateral cross-section or a pentagonal shape when viewed in a lateral cross-section. Further, even in the case of a container 1 having a non-polygonal shape such as an elliptical shape, if positional displacement of the shrink-fit label 2 in the lateral direction is problematic, then the present invention is effective. FIG. 18 illustrates one example of a case in which the side surface 11 of the container 1 has an elliptical shape when viewed in a lateral cross-section, and in a similar manner to FIG. 3, illustrates the container 1 viewed from the bottom surface 10. The bottom surface 10 of the container 1 is an elliptical shape, and the lateral direction detection marks 51 are formed in a total of four locations on the bottom surface-covering portion 40 of the shrink-fit label 2, in two locations on the major axis 70 and two locations on the minor axis 71 of the ellipse. By orienting the major axis 70 of the ellipse parallel to the X-axis and the minor axis 71 of the ellipse parallel to the Y-axis, positional displacement of the lateral direction detection marks 51 can be easily measured. It is desirable that a lateral direction detection mark 51 is provided in at least one location among the total of four locations composed of the two locations on the major axis 70 and the two locations on the minor axis 71 of the bottom surface-covering portion 40. Further, the cross-sectional elliptical shape of the bottom surface 10 or the side surface 11 of the container 1 need not necessarily be a strictly mathematical ellipse, and includes oval shapes and oblong shapes that include partial straight lines. In this manner, in those cases where the cross-sectional shape of the bottom surface 10 or the side surface 11 of the container 1 is longer in one prescribed direction and shorter in a direction orthogonal to this prescribed direction, the center line that passes through the center of the bottom surface 10 of the container 1 along the longer direction of the bottom surface 10 of the container 1 is deemed the major axis, and the center line that passes through the center of the bottom surface 10 of the container 1 along the short direction of the bottom surface 10 of the container 1 is deemed the minor axis, and it is desirable that a lateral direction detection mark 51 is provided in at least one location among the total of four locations composed of two locations on the major axis and two locations on the minor axis of the bottom surface-covering portion 40.

Moreover, the container 1 need not have the flange 12, and for example, polygonal PET bottles may be used.

Moreover, various modifications are also possible to the shape of the lateral direction detection marks 51, and shapes besides those that extend in a direction substantially orthogonal to the bottom edge 2b of the shrink-fit label 2 may be used, including circular and elliptical shapes, diamond shapes and parallelograms. Regardless of the shape of the lateral direction detection marks 51, the positions (for example, the center positions) of the lateral direction detection marks 51 can be identified, enabling the detection of any positional displacement of the shrink-fit label 2 in the lateral direction. Shapes which include straight lines such as diamond shapes and parallelograms are more easily detected than circular and elliptical shapes, and are consequently preferred.

Further, UV ink may be used for the longitudinal direction detection mark 50 and the lateral direction detection marks 51.

Moreover, the marks for the longitudinal direction detection mark 50 and the lateral direction detection marks 51 may be UV luminescent marks which are transparent under normal conditions but emit light upon radiation with ultraviolet light. For example, in the cases of shrink-fit labels 2 for which the underlying tone is transparent, transparent containers 1, or transparent contents or the like, if it is undesirable to impair the feeling of transparency, then UV luminescent marks are preferably used. Further, rather than forming black marks on a white base (in which the background color is white), yellow or white marks may be formed on a black base (in which the background color is black). Moreover, besides those cases in which a white printed layer is provided as a background layer on the shrink-fit label 2, if for example the container itself is white, then by using the white container 1 as the background, a black mark may be provided on a transparent label base material, or a black printed layer may be provided on the transparent label substrate, and punched-out transparent marks such as text then provided by excluding certain portions of the black printed layer.

### REFERENCE SIGNS LIST

1: Container
2: Shrink-fit label
2a: Top edge
2b: Bottom edge
3: Overlapped portion
4a: Fold
4b: Fold
5: Long label body
10: Bottom surface
10a: Peripheral edge
11: Side surface
12: Flange
15: Main side wall portion
16: Stepped portion
17: Side wall upper portion
20: Main wall surface
21: Main wall surface
22: Corner portion
30: Upper wall surface
31: Upper wall surface
32: Corner portion
40: Bottom surface-covering portion
41: Long side portion
42: Short side portion
50: Longitudinal direction detection mark
51: Lateral direction detection mark
60: Center line
61: Center line
62: Point of intersection
70: Major axis
71: Minor axis
80: Display portion
P1: Measurement point
P2: Measurement point

## Claims

1. A container with a shrink-fit label, fitted with a shrink-fit label that extends from a side surface onto a bottom surface of the container, wherein
a lateral direction detection mark for detecting positional displacement of the shrink-fit label in a lateral direction relative to the container is provided on a bottom surface-covering portion of the shrink-fit label that covers the bottom surface of the container.

2. The container with a shrink-fit label according to Claim 1, wherein the lateral direction detection mark has a side edge that extends in a direction substantially orthogonal to a bottom edge of the shrink-fit label.

3. The container with a shrink-fit label according to Claim 2, wherein the lateral direction detection mark is a linear mark that extends in a direction substantially orthogonal to the bottom edge of the shrink-fit label.

4. The container with a shrink-fit label according to any one of Claims 1 to 3, wherein the side surface of the container forms a rectangular shape when viewed in a lateral cross-section, the bottom surface-covering portion comprises four side portions corresponding with four walls of the side surface, and the lateral direction detection mark is provided in a central region in a lateral direction on at least one side portion among the four side portions.

5. The container with a shrink-fit label according to Claim 4, wherein lateral direction detection marks are formed on a pair of opposing side portions among the four side portions.

6. The container with a shrink-fit label according to any one of Claims 1 to 3, wherein the side surface of the container forms an elliptical shape when viewed in a lateral cross-section, and the lateral direction detection mark is provided in at least one location among a total of four locations composed of two locations positioned on a major axis and two locations positioned on a minor axis of the bottom surface-covering portion.

7. The container with a shrink-fit label according to any one of Claims 1 to 6, wherein a longitudinal direction detection mark for detecting positional displacement of the shrink-fit label in a longitudinal direction relative to the container is formed on the bottom surface-covering portion as a line that extends around a bottom edge of the shrink-fit label, and at least a portion of the lateral direction detection mark is positioned inside the longitudinal direction detection mark.

8. A shrink-fit label that is fitted so as to extend from a side surface onto a bottom surface of a container, wherein
a lateral direction detection mark for detecting positional displacement of the shrink-fit label in a lateral direction relative to the container is provided on a portion of the shrink-fit label that covers the bottom surface of the container.

9. The shrink-fit label according to Claim 8, wherein lateral direction detection marks are provided in two positions which bisect a perimeter of the shrink-fit label.

10. A manufacturing method for a container with a shrink-fit label, the method comprising a step of fitting a shrink-fit label provided with a lateral direction detection mark to a side surface of a container, a step of heat-shrinking and fitting the shrink-fit label to the container so that the lateral direction detection mark is positioned on a portion of the shrink-fit label that covers a bottom surface of the container, and a step of detecting any positional displacement of the shrink-fit label in a lateral direction relative to the container by measuring a position of the lateral direction detection mark on the shrink-fit label fitted to the container.
